# EUROPÄISCHE PATENTSCHRIFT

(11) **EP 3 184 958 B1**
(45) Veröffentlichungstag und Bekanntmachung des Hinweises auf die Patenterteilung: **18.03.2020**
(21) Anmeldenummer: 16203174.4
(22) Anmeldetag: 09.12.2016
(51) Int. Cl.: G01B 11/02, G01B 11/06, G01B 11/245

(54) **VORRICHTUNG ZUR ENTLEERUNG EINES TRANSPORTTRÄGERS MIT EINER VORRICHTUNG ZUR WERKSTÜCKIDENTIFIKATION UND/ODER WERKSTÜCKLAGEERKENNUNG EINER VIELZAHL WILLKÜRLICH ANGEORDNETER WERKSTÜCKE INNERHALB DES TRANSPORTTRÄGERS UND MIT EINER GREIFEINRICHTUNG ZUR ENTLEERUNG DES TRANSPORTTRÄGERS**
APPARATUS FOR EMPTYING A CONVEYOR WITH AN APPARATUS FOR WORKPIECE IDENTIFICATION AND/OR WORKPIECE POSITION DETECTION OF A PLURALITY OF ARBITRARY DISPOSED WORKPIECES WITHIN THE CONVEYOR AND GRIPPING APPARATUS FOR EMPTYING THE CONVEYOR
DISPOSITIF POUR VIDER UN CONVEYEUR AVEC UN DISPOSITIF D'IDENTIFICATION ET/OU DE RECONNAISSANCE DE POSITION DE PIÈCES MULTIPLES ARRANGÉES ARBITRAIREMENT SUR LE CONVOYEUR ET DISPOSITIF POUR SAISIR LES PIÈCES POUR VIDER LE CONVOYEUR

(30) Priorität: 23.12.2015 DE 102015016849
(43) Veröffentlichungstag der Anmeldung: 28.06.2017
(73) Patentinhaber: Liebherr-Verzahntechnik GmbH, 87437 Kempten (DE)
(72) Erfinder: Hänschke, David, 87452 Altusried (DE); Riedmiller, Bernhard, 87497 Wertach (DE)
(74) Vertreter: Laufhütte, Dieter

(56) Entgegenhaltungen:
- EP-A1- 2 485 010
- WO-A1-96/30718
- DE-A1-102013 103 252
- JP-A- 2009 129 189
- US-A1- 2006 017 911
- US-A1- 2007 223 009
- US-A1- 2014 293 009
- US-A1- 2014 347 438
- US-A1- 2014 347 473

## Beschreibung

Die Erfindung betrifft eine Vorrichtung zur Entleerung eines Transportträgers mit einer Vorrichtung mit einer Vorrichtung zur Werkstückidentifikation und/oder Werkstücklageerkennung einer Vielzahl willkürlich angeordneter Werkstücke innerhalb eines Transportträgers mittels einer Sensoranordnung umfassend mindestens zwei Bildsensoren und mindestens zwei Lasereinheiten und mit einer Greifeinrichtung zur Entleerung des Transportträgers.

Solche Vorrichtungen können beispielsweise bei der automatisierten Bestückung von Maschinen, Bandsystemen oder Korbträgern und dergleichen eingesetzt. Ein derartiges Gesamtsystem, in welchem ein Handhabungsgerät zum Entnehmen von Werkstücken beschrieben ist, wird beispielsweise in der DE 10 2012 013 030 A1 beschrieben. Grundsätzlich dient die Sensoranordnung dazu, ein topografisches Oberflächenbild vom Inhalt des jeweiligen Transportträgers zu erstellen.

Es sind Sensoranordnungen bekannt, welche mittels eines Schwenkens einer Lasereinheit einen Laserfächer über den zu erfassenden Bereich legen, wobei eine starr angeordnete Kamera die entstehenden Lichtpunkte erfasst. Auf diese Weise beleuchtete Werkstücke können durch einen Roboter aus einer Kiste oder einem Behältnis entnommen werden.

Nachteilig ist es hierbei allerdings, dass das Schwenken eine Winkeländerung impliziert. Die Überlagerung der Positionsdaten kann daher Genauigkeitsfehler aufweisen. Zudem weisen die bekannten Anordnungen Abschattungen innerhalb des Transportträgers auf, so dass beispielsweise entlang der Seitenwände liegende Werkstücke nicht erfassbar sind. Mit einer derartigen Abschattung ist ein kollisionsfreies Arbeiten sowie eine optimale Entleerung des Transportträgers durch den Roboter nicht gewährleistet. Eventuelle Ausbeulungen oder Unebenheiten des Transportträgers können zudem nicht erkannt werden.

Aus der DE 10 2005 009 606 A1 ist eine Sensoranordnung zur dreidimensionalen Lageerkennung und Überwachung eines Werkzeugs mit drei Kameras bekannt. Diese sind derart angeordnet, dass der gemeinsame Sichtbereich aller Kameras einen Bereich von 360° um das Werkzeug herum erfasst. Hier ist auch eine Beleuchtungseinrichtung vorgesehen, welche um die Kameras herum ausgebildet ist. Es wird zudem beschrieben, dass die Sensoranordnung einen Projektor zur Projektion eines Musters aufweist und ein LED-Projektor ist. Es wird weiter beschrieben, dass durch die Kombination einer Sensoranordnung zur Überwachung des Arbeitsergebnisses eines Werkzeugs mit der dreidimensionalen Lageerkennung mit drei Kameras, mit einer Flächenbeleuchtung und mit einem Projektor ein flexibel einsetzbarer Inspektionssensor geschaffen werde. Dieser Sensor eignet sich für die kontinuierliche Überwachung eines Arbeitsergebnisses eines Werkzeugs als auch für die dreidimensionale Lagebestimmung aus der Bewegung der Sensoranordnung. Zusätzlich zu einer Flächenbeleuchtung durch die Beleuchtungseinrichtung, welche Lochmerkmale in der bearbeiteten Oberfläche zur Lageerkennung ausreichend kontrastieren kann, ist ein Projektor in die Sensoranordnung integriert, um ein Muster auf die bearbeitete Oberfläche zu projizieren. Gegenstand der DE10 2005 009 606 A1 ist die optimale Überwachung eines Arbeitsergebnisses eines Werkstücks, wobei auch eine dreidimensionale Lagebestimmung erfolgen soll. Die vorgenannte Anordnung dient dagegen nicht dazu, die Entnahme von Werkstücken aus einem Behälter oder einem Transportträger zu ermöglichen.

Die US 2007/0223009 A1 zeigt eine optische Messvorrichtung zur 3D-Vermessung eines Bauteils, bei welcher mehrere Triangulations-Sensoren an einer Messbrücke angeordnet sind, welche über das zu vermessende Werkstück verfahren wird. Weitere Sensoranordnungen sind aus den Druckschriften US 2014/347438 A1, EP 2485010 A1, US 2006/017911 A1, DE 10 2013 103252 A1, WO 96/30718 A1 und US 2014/347473 A1 bekannt.

Aufgabe der vorliegenden Erfindung ist es, eine Vorrichtung Vorrichtung zur Entleerung eines Transportträgers nach dem Oberbegriff des Anspruchs 1 derart weiterzubilden, dass die Entleerung des Transportträgers verbessert wird.

Diese Aufgabe wird mittels einer Vorrichtung mit den Merkmalen des Anspruchs 1 sowie durch ein Verfahren gemäß Anspruch 9 gelöst. Vorteilhafte Weiterbildungen der Erfindung sind Gegenstand der abhängigen Ansprüche.

Demnach weist die Vorrichtung zur Entleerung eines Transportträgers eine Vorrichtung zur Werkstückidentifikation und/oder Werkstücklageerkennung einer Vielzahl willkürlich angeordneter Werkstücke innerhalb des Transportträgers und eine Greifeinrichtung zur Entleerung des Transportträgers auf, wobei wobei die Vorrichtung zur Werkstückidentifikation und/oder Werkstücklageerkennung eine Sensoranordnung mit mindestens zwei Bildsensoren und mindestens zwei Lasereinheiten aufweist, wobei die Bildsensoren und die Lasereinheiten mittels Verbindungselementen fest einander zugeordnet sind und über eine Achse der Vorrichtung oberhalb des Transportträgers linear verfahrbar sind. Das bedeutet, dass sie innerhalb einer Ebene und somit im gleichen Abstand zu einem Transportträger verfahren werden. Mittels der linearen Verfahrbarkeit und der fest zugeordneten Einheit, kann sichergestellt werden, dass keine Winkeländerungen beim Verfahren erfolgen.

Diese Ausgestaltung der Sensoranordnung ermöglicht eine Minimierung auftretender Randabschattungen an dem Transportträger und somit eine optimale Ausleuchtung und Erfassung der Transportträger.

Die Sensoranordnung umfasst erfindungsgemäß zumindest zwei Bildsensoren, das heißt beispielsweise Kameras, sowie zumindest zwei Lasereinheiten, um eine Ausleuchtung und Erfassung aller Ecken - beispielsweise von vier Ecken - des Transportträgers zu realisieren. Vorzugsweise finden leistungsstarke Laser in der Lasereinheit Anwendung. Es ist möglich ein genaues und wenig fehlerbehaftetes topografisches Oberflächenbild des Inhalts des jeweiligen Transportträgers erstellt werden. Unter Transportträger können Träger mit geschlossenen Seitenwänden sowie Gitterkörbe verstanden werden. Ebenfalls ist es denkbar, dass mehrere Transportträger Anwendung finden. Mittels der Sensoranordnung kann eine optimale Entleerung des Transportträgers über die Greifeinrichtung, beispielsweise einen Roboterarm, gewährleistet werden. Vorteilhafterweise sind die Bildsensoren und die Lasereinheiten linear verfahrbar. Das bedeutet, dass sie innerhalb einer Ebene und somit im gleichen Abstand zu einem Transportträger verfahren werden. Mittels der linearen Verfahrbarkeit und der festzueinander angeordneten Einheiten, kann sichergestellt werden, dass keine Winkeländerungen beim Verfahren erfolgen. Ebenfalls bietet die Verfahrbarkeit den Vorteil, dass unabhängig von der Transportträgergröße eine optimale Ausleuchtung und Erfassung gewährleistet werden kann.

Bevorzugte Ausgestaltungen der Erfindung ergeben sich aus den sich an den Hauptanspruch anschließenden Unteransprüchen.

In einer bevorzugten Ausführungsform zeichnet sich die erfindungsgemäße Vorrichtung durch eine lineare Verfahrbarkeit der Sensoranordnung mindestens entlang der Gesamtlänge des zu erkennenden Transportträgers aus. Des Weiteren sind die jeweiligen Positionen der Sensoranordnung mittels eines Positionsgebers erfassbar. Das bietet den Vorteil, dass der gesamte Transportträger abgefahren werden kann, sodass ebenfalls Werkstücke, die in Randbereichen des Transportträgers liegen, erkannt werden können. Ebenfalls ist somit eine Verfahrbarkeit außerhalb des Kollisionsbereiches des Roboters möglich.

Erfindungsgemäß erlaubt die Sensoranordnung die Erkennung von einer Vielzahl willkürlich angeordneter Werkstücke innerhalb eines Transportträgers. Vorteilhafterweise handelt es sich hier um Schüttgüter, welche unverpackt und unsortiert in einem Transportträger angeordnet sind. Dabei ist es denkbar, dass ein derartiger Transportträger als ein Container, eine Gitterbox oder als ein vergleichbarer Transportbehälter ausbildbar ist.

Vorteilhaft ist es des Weiteren, dass die Erkennung der Werkstücke in Abschattungsbereichen möglich ist. Unter Abschattungsbereichen können Abschattung der Seitenwände der Transportträger oder aber auch Abschattungen der einzelnen Werkstücke zueinander verstanden werden. Durch die unsortierte Anordnung und die dadurch entstandene Überlagerung der Werkstücke können Abschattungen auf den darunter befindlichen Werkstücken entstehen und somit mögliche Erkennungsproblematiken auftreten. Daher soll eine optimale Ausleuchtung derartiger Abschattungsbereiche mittels einer in einem festgelegten Winkel zueinander angeordnete Sensoranordnung umfassend der Bildsensoren und der Lasereinheiten realisiert werden. Mindestens zwei Verbindungselemente sind mit einem Bildsensor und einer Lasereinheit über eine Traverse miteinander gekoppelt. Hierdurch wird durch entsprechende Einstellung der jeweiligen Bildsensoren und Lasereinheiten zueinander eine optimale Ausleuchtung der Transportträger sichergestellt. Vorteilhaft ist es, dass die zumindest zwei Bildsensoren und die zumindest zwei Lasereinheiten zueinander, vorzugsweise in einem Winkel von 5° geneigt angeordnet sind. Die Neigung um 5° ist hier lediglich als ein Richtwert zu verstehen, sodass eine Verwendung von abweichenden Winkeln ebenfalls denkbar wäre. Eine derartige Neigung der Bildsensoren und Lasereinheiten ermöglicht somit eine gegeneinander gerichtete Erkennung und ebenfalls Ausleuchtung des Transportträgers. Vorteilhaft ist es ebenfalls, dass die Sensoranordnung, insbesondere der Bildsensor und die Lasereinheit, fest zueinander ausgerichtet und werkseitig kalibriert sind. Das bietet den Vorteil, dass der Bildsensor und die Kamera in einer zueinander unveränderten Stellung verfahren werden und somit separate Positionsdaten generieren können.

In einer weiteren vorteilhaften Ausführungsform ist der Transportträger unabhängig von der Transportträgerausgestaltung oder Transportträgerverformung vollständig erfassbar. Mögliche Beschädigungen an der Außenseite des Transportträgers, können zu Verformungen führen, sodass unterhalb einer solchen Verformung befindliche Werkstücke eventuellen Abschattungen etc. unterliegen. Mittels der linearen Verfahrbarkeit der Sensoranordnung können die oben beschriebenen Bereiche ausreichend ausgeleuchtet und erfasst werden. Das aus den Lasereinheiten austretende Laserlicht kann derart aufgefächert werden, dass ein Winkel von vorzugsweise 45° bis 60° ausbildbar ist. Je nach Abstand und Auffächerungswinkel des Laserlichts können nun verschiedene Größen von Transportträgern bzw. auch Werkstücke unabhängig von der Größe, Tiefe und Breite des Transportträgers erfasst werden. Bei einer beispielsweise abzudeckenden Transportträgergröße von 1.000 mm x 1.200 mm x 1.000 mm wird eine Auffächerung des Lasers von 60° vorteilhaft sein. Bei kleineren Transportträgergrößen in einer Größe von beispielsweise 800 mm x 1.200 mm x 1.000 mm kann der Auffächerungswinkel des Laserlichts mit ca. 45° aufgefächert werden. Diese beiden hier angegebenen Werte sind beispielhafte Grenzwerte. Zwischengrößen können mit entsprechend aufgefächertem Laserlicht mit entsprechenden Zwischenwinkeln beleuchtet werden.

In einer weiteren vorteilhaften Ausführungsform ist die Werkstückgröße unabhängig von den Erfassungsmöglichkeiten der Sensoranordnung, da mittels dieser die Werkstücke unabhängig von der Größe, Form und Tiefe etc. erkannt werden können. Die Bildsensoren sowie die Lasereinheiten werden unter dem zuvor angegebenen vorbestimmten Winkel angeordnet und entlang der Achse, beispielsweise einer Linearachse, verfahrbar befestigt. Der Abstand zwischen dem Laserlicht und dem Sichtfeld des Bildsensors bleibt beim Verfahren der Sensoranordnung gleich, sodass mit Hilfe einer entsprechenden Software die entstehenden Positionsdaten überlagert und ausgewertet werden können. Der vorgenannte Winkel zwischen der Lasereinrichtung und der Kamera wird konstant gehalten, sodass keine Winkelveränderungen und Höhenveränderungen der Sensoranordnung gegeben sind. Durch das lineare Verfahren der Sensoranordnung oberhalb des Transportträgers wird eine Aufteilung des zu erfassenden Bereichs in nahezu senkrechte Abschnitte erreicht.

Von besonderem Vorteil ist es, dass mittels der Verwendung der hier beschriebenen Sensoranordnung die Zykluszeit der Greifeinrichtung, vorzugsweise eines Roboters optimierbar ist und dass ggf. Echtzeitanforderungen überhaupt realisierbar werden. Dem liegt die Tatsache zugrunde, dass die Anforderung bezüglich der Zykluszeit des Roboters sehr hohen Anforderungen unterliegt. Während der Arbeitsbewegung des Roboters, in der sich der Roboter nicht innerhalb des Transportträgers befindet, muss jeweils der zu entleerende Transportträger gescannt und erfasst werden, sodass der Roboter keine Stillstandzeiten aufweist. Unter einer Arbeitsbewegung wird ein Vorgang des Roboters verstanden, wie beispielsweise das Greifen des Werkstücks. Durch die Gewährleistung der optimalen Ausleuchtung und Erkennung der Werkstücke ist es möglich diese Sensoranordnung unabhängig der zu handhabenden Werkstückgröße einzusetzen. Es ist möglich die aufgrund einer zuverlässigen Teileerkennung ebenfalls eine schnelle Entleerung eines Transportträgers mit vielen kleineren Werkstücken zu realisieren.

Ebenfalls ist es vorteilhaft, dass die Sensoranordnung unabhängig von Umgebungsbedingungen anwendbar ist.

Vorteilhaft wird eine Datenverarbeitungseinrichtung verwendet, in der über eine Bildverarbeitungssoftware die Daten der Bildsensoren und die Daten des Positionsgebers, vorzugsweise in Form einer 3D Punktwolke, auswertbar sind. Eine derartige Ausgestaltung bietet den Vorteil, dass eine Vereinfachung der Zusammensetzung der Positionsdaten, die auch als Punktewolke bezeichnet wird, möglich ist. Hier sind ja gerade keine Winkeländerungen zu berücksichtigen. Bei einer abweichenden Werkstückhöhe innerhalb des Transportträgers ist eine Längenänderung maximal über die Tiefe des Transportträgers zu berücksichtigen. Diese Änderung ist jedoch einfach auszugleichen, da bereits durch die Größe des Transportträgers die maximale Abweichung bekannt und somit leicht ausgleichbar ist. Zur Erzeugung eines räumlichen Oberflächenbildes sind über die Bildverarbeitungssoftware die einzelnen Aufnahmen der Bildsensoren, die aus verschiedenen Sensorpositionen aufgenommen wurden, überlagerbar. Diese Daten werden in einer aufgenommenen Entfernungsposition zu dem aufgenommenen Gegenstand zugeordnet und dann ausgewertet.

Besonders vorteilhaft sind die Lasereinheiten derart angeordnet, dass ein direkter Blick in den Laserstrahl vermeidbar ist. Zusätzlich oder alternativ können auf der von der Lasereinheit abgewandten Seite Schutzvorrichtungen vorgesehen sein, um einen direkten Blick auf den Laser zu behindern.

Zudem wird ein Verfahren zur Werkstückidentifikation und/oder Werkstücklageerkennung einer Vielzahl willkürlich angeordneter Werkstücke innerhalb eines Transportträgers zur Entleerung des Transportträgers mittels einer Greifeinrichtung vorgeschlagen, wobei die Werkstückidentifikation und/oder Werkstücklageerkennung mittels einer Sensoranordnung umfassend mindestens zwei Bildsensoren und mindestens zwei Lasereinheiten erfolgt. Die Bildsensoren und die Lasereinheiten der Sensoranordnung sind hier mittels Verbindungselementen fest einander zugeordnet und werden oberhalb des Transportträgers linear verfahren. Das bedeutet, dass sie innerhalb einer Ebene und somit im gleichen Abstand zu einem Transportträger verfahren werden. Mittels der linearen Verfahrbarkeit und der festzueinander angeordneten Einheiten, kann sichergestellt werden, dass keine Winkeländerungen beim Verfahren erfolgen. Ebenfalls bietet die Verfahrbarkeit den Vorteil, dass unabhängig von der Transportträgergröße eine optimale Ausleuchtung und Erfassung gewährleistet werden kann.

In einer weiteren vorteilhaften Ausführungsform wird mittels der linearen Verfahrbarkeit der Sensoranordnung eine Aufteilung des zu erfassenden Bereichs in nahezu senkrechte Teilabschnitte erreicht. Die Bildsensoren sowie die Lasereinheiten werden unter dem zuvor angegebenen vorbestimmten Winkel angeordnet und entlang der Achse, beispielsweise einer Linearachse, verfahrbar befestigt. Der Abstand zwischen dem Laserlicht und dem Sichtfeld des Bildsensors bleibt beim Verfahren der Sensoranordnung gleich, sodass mit Hilfe einer entsprechenden Software die entstehenden Positionsdaten überlagert und ausgewertet werden können. Der vorgenannte Winkel zwischen der Lasereinrichtung und der Kamera wird konstant gehalten, sodass keine Winkelveränderungen und Höhenveränderungen der Sensoranordnung gegeben sind.

Weitere Einzelheiten, Merkmale und Vorteile der Erfindung werden anhand eines in der Zeichnung dargestellten Ausführungsbeispiels erläutert. Es zeigen:
- Fig. 1:: eine Schnittansicht einer Sensoranordnung nach dem Stand der Technik,
- Fig. 2:: die Sensoranordnung gemäß Figur 1 oberhalb eines geschnitten dargestellten Transportbehälters,
- Fig. 3:: eine Sensoranordnung gemäß einer Ausführungsform der vorliegenden Erfindung und
- Fig. 4:: die Sensoranordnung gemäß Figur 3 oberhalb eines geschnitten dargestellten Transportbehälters.

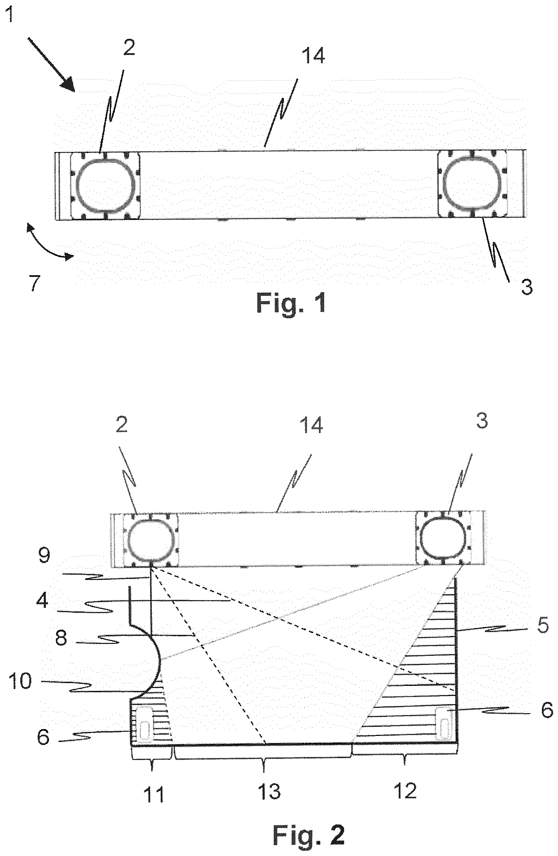

Die Figur 1 zeigt eine bekannten Sensoranordnung 1 nach dem Stand der Technik mit einer Lasereinheit 2, mit einem integrierten Drehspiegel und einem Bildsensor 3 zum Erfassen des von der Lasereinheit 2 stammenden Laserlichtes (in der Figur nicht gezeigt). Die Lasereinheit 2 ist derart in Doppelpfeilrichtung 7 schwenkbar, dass ein zu erfassende Bereich ausgeleuchtet werden kann. Der Bildsensor 3 ist starr angeordnet, wodurch das Sichtfeld des Bildsensors 3 eingeschränkt wird.

Die Figur 2 zeigt die in Figur 1 beschriebene Sensoranordnung 1 nach dem Stand der Technik oberhalb eines geschnitten dargestellten Transportträgers 5. Der Transportträger 5 weist Seitenwände auf, wobei eine Seitenwand eine Ausbeulung 10 aufweist. Bei einem idealen Transportträger 5 würde der Laserstrahl 4 das in der Ecke befindliche Werkstück 6 ausleuchten und der Bildsensors 3 dieses erfassen. Bei eventuellen Ausbeulungen oder Unebenheiten 10 des Transportträgers 5 kann es aber sein, dass der Laserstrahl 4 nicht in die Ecke gelangt. Durch die Ausbeulungen 10 entsteht eine Abschattung 1. Hierdurch wird eine Erfassung innerhalb dieses Bereiches 11 befindlicher Werkstücke 6 verhindert. Zudem ist durch eine stationäre Anordnung des Bildsensors 3 das Sichtfeld der Kamera 14 eingeschränkt, was eine Abschattung 12 und somit ein Nichterkennen eines in der Abschattung 12 befindlichen Werkstücks 6 zur Folge hat. Wird der Laserstrahl 8 der Lasereinheit 2 allerdings weiter geschwenkt und befindet sich somit innerhalb des Sichtfeldes der Kamera 13 ist eine problemlose Entnahme des dort befindlichen Werkstücks 6 möglich. Bei noch weiterem Schwenken des Laserstrahls 9 befindet sich das Werkstück 6 wieder innerhalb der Abschattung 12, was zur Folge hat, dass es wieder nicht erfasst werden kann.

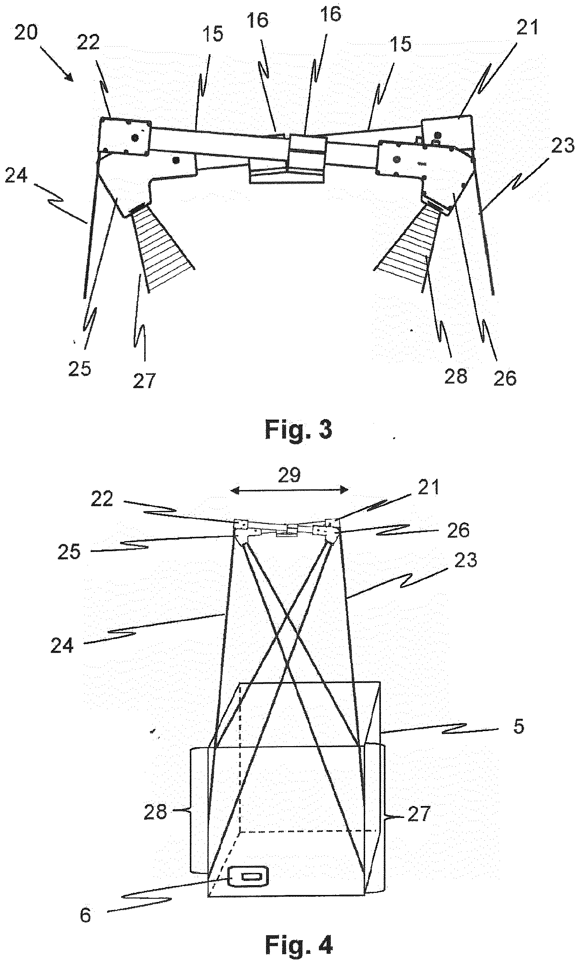

Figur 3 zeigt eine in einer erfindungsgemäßen Vorrichtung einsetzbare Sensoranordnung 20, welche in diesem Ausführungsbeispiel zwei Bildsensoren, insbesondere Kameras 25, 26 und zwei Lasereinheiten 21, 22 aufweist. Der Laser 21 und die Kamera 25 sind jeweils mittels eines Verbindungselementes 15 unter Einstellung eines vordefinierten Winkels verbunden. Der Laser 22 und die Kamera 26 sind ebenfalls in einem vordefinierten Winkel angeordnet. Dasselbe gilt für den Laser 21 und die Kamera 25. Zwei Verbindungselemente sind mittig über eine Traverse mit Befestigungselementen 16 - wie in der Figur 3 dargestellt - gegenseitig leicht verkippt miteinander verbunden. Der Verkippungswinkel beträgt im Ausführungsbeispiel 5°. Jedoch sind davon abweichende Winkel ebenfalls denkbar. Durch eine derartige Anordnung der Laser 21, 22 und der Kameras 25, 26 ist eine optimale Ausleuchtung des Transportträgers 5 und der darin befindlichen Werkstücke 6 realisierbar. Der Erfassungsbereich 27, 28 der Kameras 25, 26 ist derart ausgebildet, dass nicht nur die Transportträgeroberfläche erfasst werden kann, sondern der ganze innenliegende Bereich des Transportträgers 5.

Die Figur 4 zeigt eine Schnittansicht eines Transportträgers 5, der von einer erfindungsgemäßen Sensoranordnung 20 ausgeleuchtet und erfasst wird. Es wird deutlich, dass der Erfassungsbereich 27, 28 der einzelnen Kameras 25, 26 die komplette Tiefe sowie Breite des Transportträgers 5 erfasst. Die erfindungsgemäße Sensoranordnung 20 ist entlang einer Achse in Doppelpfeilrichtung 29 verfahrbar angeordnet und mit einem Positionsgeber versehen (in der Figur 4 nicht dargestellt). Mittels der Linearbewegung in Doppelpfeilrichtung 29 der Sensoranordnung 20 ist ein vollständiges Erfassen des Transportträgers 5 sowie der darin befindlichen Werkstücke 6 realisierbar. Die Linearbewegung in Doppelpfeilrichtung 29 der Sensoranordnung 20 ermöglicht, selbst bei auftretenden Ausbeulungen der Seitenwände (in der Figur 4 nicht dargestellt), durch die in einem bestimmten Winkel angeordneten Laser 21, 22 und Kameras 25,26 eine optimale Ausleuchtung und Erfassung des Inhalts. Die Laserstrahlen 23, 24 unterteilen den zu erfassenden Bereich in nahezu senkrechte Abschnitte (in Figur 4 nicht dargestellt). Der Erfassungsbereich der Kameras 27, 28 kann durch die starre Anordnung lediglich einen Laserstrahl 23, 24 wahrnehmen und auswerten, wodurch eventuell auftretende Auswertefehler vermieden werden. Eine Überschneidung der Laserstrahlen 22, 23 ist ebenfalls nicht gegeben, da die Sensoranordnung 20 in ihrer Ausgestaltung starr angeordnet ist.

## Patentansprüche

1. Vorrichtung zur Entleerung eines Transportträgers mit einer Vorrichtung zur Werkstückidentifikation und/oder Werkstücklageerkennung einer Vielzahl willkürlich angeordneter Werkstücke innerhalb des Transportträgers (5) und mit einer Greifeinrichtung zur Entleerung des Transportträgers (5), wobei die Vorrichtung zur Werkstückidentifikation und/oder Werkstücklageerkennung eine Sensoranordnung (20) umfasst,
wobei die Sensoranordnung (20) mindestens zwei Bildsensoren (25, 26) und mindestens zwei Lasereinheiten (21, 22) umfasst, und wobei die Bildsensoren (25, 26) und die Lasereinheiten (21, 22) der Sensoranordnung mittels Verbindungselementen (15) fest einander zugeordnet sind und oberhalb des Transportträgers (5) über eine Achse der Vorrichtung linear verfahrbar sind.

2. Vorrichtung nach Anspruch 1, **gekennzeichnet durch** eine lineare Verfahrbarkeit der Sensoranordnung (20) mindestens entlang der Gesamtlänge des zu erkennenden Transportträgers (5), wobei die jeweilige Position der Sensoranordnung (20) mittels eines Positionsgebers erfassbar ist.

3. Vorrichtung nach einem der vorhergehenden Ansprüche, **gekennzeichnet durch** die Erkennung der Werkstücke in Abschattungsbereichen und einer Ausleuchtung der Abschattungsbereiche durch eine in einem festgelegten Winkel zueinander angeordnete Sensoranordnung (20) umfassend die Bildsensoren (25, 26) und die Lasereinheiten (21, 22).

4. Vorrichtung nach einem der vorhergehenden Ansprüche, **dadurch gekennzeichnet, dass** unabhängig von der Transportträgerausgestaltung oder Transportträgerverformung der vollständige Transportträger erfassbar ist.

5. Vorrichtung nach einem der vorhergehenden Ansprüche, **dadurch gekennzeichnet, dass** die Sensoranordnung (20) unabhängig von der Werkstückgröße, dem Werkstückgewicht und der Werkstückform anwendbar ist.

6. Vorrichtung nach einem der vorhergehenden Ansprüche, **dadurch gekennzeichnet, dass** die Sensoranordnung (20) unabhängig von Umgebungsbedingungen anwendbar ist.

7. Vorrichtung nach einem der vorhergehenden Ansprüche, **gekennzeichnet durch** eine Datenverarbeitungseinrichtung, in der über eine Bildverarbeitungssoftware die Daten der Bildsensoren (25, 26) und die Daten des Positionsgebers, vorzugsweise in Form einer 3D Punktewolke, auswertbar sind.

8. Vorrichtung nach einem der vorangegangenen Ansprüche, **dadurch gekennzeichnet, dass** zur Erzeugung eines räumlichen Oberflächenbildes über die Bildverarbeitungssoftware die Einzelaufnahmen der Bildsensoren (25, 26), die aus verschiedenen Sensorpositionen aufgenommen wurden, überlagerbar und einer aufgenommenen Entfernungsposition zu dem aufgenommenen Gegenstand zuzuordnen ist.

9. Verfahren zur Werkstückidentifikation und/oder Werkstücklageerkennung einer Vielzahl willkürlich angeordneter Werkstücke innerhalb eines Transportträgers (5) zur Entleerung des Transportträgers mittels einer Greifeinrichtung, wobei die Werkstückidentifikation und/oder Werkstücklageerkennung mittels einer Sensoranordnung (20) umfassend mindestens zwei Bildsensoren (25, 26) und mindestens zwei Lasereinheiten (21, 22) erfolgt, wobei die Bildsensoren (25, 26) und die Lasereinheiten (21, 22) der Sensoranordnung mittels Verbindungselementen (15) fest einander zugeordnet sind und oberhalb des Transportträgers (5) über eine Achse der Vorrichtung linear verfahren werden.

10. Verfahren nach Anspruch 9, **dadurch gekennzeichnet, dass** mittels der linearen Verfahrbarkeit der Sensoranordnung (20) eine Aufteilung des zu erfassenden Bereichs in nahezu senkrechte Teilabschnitte erreicht wird.

11. Verfahren nach Anspruch 9 oder 10 unter Verwendung einer Vorrichtung nach einem der Ansprüche 1 bis 8.

## Claims

1. An apparatus for emptying a transport unit having an apparatus for workpiece identification and/or workpiece position recognition of a plurality of randomly arranged workpieces within the transport unit (5) and having a picking device for emptying the transport unit (5), wherein the apparatus for workpiece identification and/or workpiece position recognition comprises a sensor arrangement (20), wherein the sensor arrangement (20) comprises at least two image sensors (25, 26) and at least two laser units (21, 22), and wherein the image sensors (25, 26) and the laser units (21, 22) of the sensor arrangement are fixedly associated with one another by means of connection elements (15) and are linearly travelable above the transport unit (5) over an axis of the apparatus.

2. An apparatus in accordance with claim 1, **characterized by** a linear travelability of the sensor arrangement (20) at least along the total length of the transport unit (5) to be recognized, with the respective position of the sensor arrangement (20) being detectable by means of a position generator.

3. An apparatus in accordance with one of the preceding claims, **characterized by** the recognition of the workpieces in shaded zones and an illumination of the shaded zones by a sensor arrangement (20) arranged at a mutually fixed angle and comprising the image sensors (25, 26) and the laser units (21, 22).

4. An apparatus in accordance with one of the preceding claims, **characterized in that** the complete transport unit is detectable independently of the transport unit design or the transport unit deformation.

5. An apparatus in accordance with one of the preceding claims, **characterized in that** the sensor arrangement (20) can be used independently of the workpiece size, of the workpiece weight, and of the workpiece shape.

6. An apparatus in accordance with one of the preceding claims, **characterized in that** the sensor arrangement (20) can be used independently of environmental conditions.

7. An apparatus in accordance with one of the preceding claims, **characterized by** a data processing device in which the data of the image sensors (25, 26) and the data of the position generator, preferably in the form of a 3D point cloud, can be evaluated via image processing software.

8. An apparatus in accordance with one of the preceding claims, **characterized in that** the individual recordings of the image sensors (25, 26) that were recorded from different sensor positions can be superposed for the generation of a spatial surface image via the image processing software and can be associated with a recorded distance position from the recorded article.

9. A method for workpiece identification and/or workpiece position recognition of a plurality of randomly arranged workpieces within a transport unit (5) for emptying the transport unit by means of a picking device, wherein the workpiece identification and/or workpiece position recognition takes place by means of a sensor arrangement (20) comprising at least two image sensors (25, 26) and at least two laser units (21, 22), and wherein the image sensors (25, 26) and the laser units (21, 22) of the sensor arrangement are fixedly associated with one another by means of connection elements (15) and are linearly traveled over an axis of the apparatus above the transport unit (5).

10. A method in accordance with claim 9, **characterized in that** a division of the zone to be detected into almost perpendicular part sections is achieved by means of the linear travelability of the sensor arrangement (20).

11. A method in accordance with claim 9 or claim 10 using an apparatus in accordance with one of the claims 1 to 8.

## Revendications

1. Dispositif destiné à vider un support de transport avec un dispositif d'identification de pièce et/ou de reconnaissance de position de pièce d'une pluralité de pièces agencées arbitrairement dans le support de transport (5) et avec un moyen de préhension destiné à vider le support de transport (5), le dispositif d'identification de pièce et/ou de reconnaissance de position de pièce comprenant un agencement de capteurs (20),
l'agencement de capteurs (20) comprenant au moins deux capteurs photographiques (25, 26) et au moins deux ensembles laser (21, 22), et les capteurs photographiques (25, 26) et les ensembles laser (21, 22) de l'agencement de capteurs étant associés fixement les uns aux autres au moyen d'éléments de liaison (15) et pouvant être déplacés de manière linéaire sur un axe du dispositif au-dessus du support de transport (5).

2. Dispositif selon la revendication 1, **caractérisé par** une capacité de déplacement linéaire de l'agencement de capteurs (20) au moins sur toute la longueur du support de transport (5) à reconnaître, la position respective de l'agencement de capteurs (20) pouvant être détectée au moyen d'un transmetteur de position.

3. Dispositif selon l'une des revendications précédentes, **caractérisé par** la reconnaissance des pièces dans des zones d'occultation et un éclairage des zones d'occultation par un agencement de capteurs (20) disposés les uns par rapport aux autres selon un angle fixe comprenant les capteurs photographiques (25, 26) et les ensembles laser (21, 22).

4. Dispositif selon l'une des revendications précédentes, **caractérisé en ce que** la totalité du support de transport peut être détectée indépendamment de la forme du support de transport ou de la déformation du support de transport.

5. Dispositif selon l'une des revendications précédentes, **caractérisé en ce que** l'agencement de capteurs (20) peut être utilisé indépendamment de la taille des pièces, du poids des pièces et de la forme des pièces.

6. Dispositif selon l'une des revendications précédentes, **caractérisé en ce que** l'agencement de capteurs (20) peut être utilisé indépendamment des conditions ambiantes.

7. Dispositif selon l'une des revendications précédentes, **caractérisé par** un moyen de traitement de données, dans lequel les données des capteurs photographiques (25, 26) et les données du transmetteur de position, de préférence sous la forme d'un nuage de points 3D, peuvent être évaluées par le biais d'un logiciel de traitement d'images.

8. Dispositif selon l'une des revendications précédentes, **caractérisé en ce que**, pour générer une image de surface tridimensionnelle par le biais du logiciel de traitement d'images, les prises de vue uniques des capteurs photographiques (25, 26), qui ont été prises depuis différentes positions de capteur, peuvent être superposées et sont à associer à une position de distance enregistrée par rapport à l'objet photographié.

9. Procédé d'identification de pièce et/ou de reconnaissance de position de pièce d'une pluralité de pièces agencées arbitrairement dans un support de transport (5) pour vider le support de transport à l'aide d'un moyen de préhension, l'identification de pièce et/ou la reconnaissance de position de pièce étant effectuées au moyen d'un agencement de capteurs (20) comprenant au moins deux capteurs photographiques (25, 26) et au moins deux ensembles laser (21, 22), les capteurs photographiques (25, 26) et les ensembles laser (21, 22) de l'agencement de capteurs étant associés fixement les uns aux autres au moyen d'éléments de liaison (15) et étant déplacés de manière linéaire sur un axe du dispositif au-dessus du support de transport (5).

10. Procédé selon la revendication 9, **caractérisé en ce que**, la capacité de déplacement linéaire de l'agencement de capteurs (20) permet d'obtenir une division de la zone à détecter en sections presque verticales.

11. Procédé selon la revendication 9 ou 10 utilisant un dispositif selon l'une des revendications 1 à 8.
